# EUROPEAN PATENT SPECIFICATION

(11) **EP 2 326 794 B1**
(45) Date of publication and mention of the grant of the patent: **17.05.2017**
(21) Application number: 09813276.4
(22) Date of filing: 28.08.2009
(51) Int. Cl.: E21B 43/01, E21B 17/01, E21B 43/013, F16L 1/12, H02G 1/10

(54) **A OFFSHORE SEABED TO SURFACE CONDUIT TRANSFER SYSTEM**
OFFSHORE-SYSTEM ZUR VERLEGUNG VON LEITUNGEN VOM MEERESGRUND ZUR OBERFLÄCHE
SYSTÈME DE TRANSFERT DE CONDUITE FOND MARIN-SURFACE EN MER

(30) Priority: 09.09.2008 MY 0803484
(43) Date of publication of application: 01.06.2011
(73) Proprietor: Misc Berhad, 50050 Kuala Lumpur (MY)
(72) Inventor: CHRISTIANSEN, Poul, Erik, 50050 Kuala Lumpur (MY); BRUMLEY, Adam, Timothy, 50050 Kuala Lumpur (MY); YAACUB, Khodijah, 50050 Kuala Lumpur (MY); MOHD ZAIN, Zanussi, 50050 Kuala Lumpur (MY)
(74) Representative: Beresford, Keith Denis Lewis
(86) International application number: PCT/MY2009/000130
(87) International publication number: WO 2010/030160

(56) References cited:
- WO-A1-00/78603
- WO-A1-97/30265
- WO-A1-03/012327
- WO-A1-2007/043862
- JP-A- 5 164 271
- US-A- 4 065 822
- US-A- 5 505 560
- US-A- 6 030 145
- US-A- 6 146 052
- US-A1- 2007 048 093
- US-B2- 7 040 841
- US-B2- 7 287 936

## Description

### Technical Field of the Invention

The present invention relates to a conduit system for transferring hydrocarbons, power or electrical/optical signals from the seabed to a floating structure in the shallow water when exposed to the environmental loadings from wind, wave and current.

### Background of the Invention

In offshore oil and gas production a variety of buoyant structures are used to support oil and gas processing equipment, storage facilities or other facilities that condition fluids which are being transferred between the seabed and the buoyant structure. Such buoyant structures include monohull vessel type structures known as FSO (Floating Storage Offloading) or FPSO's (Floating Production Storage Offloading), semi submersibles, tension leg platforms, caisson structures including spar types, CALM (Crude and a loading buoy) buoys etc. Common for all these structures is that when exposed to a combination of wind, wave and current the structures will displace in the horizontal and vertical plane. Conduits between such structures and the seabed will therefore need to incorporate some means of accommodating this relative movement.

Flexible pipes constructed from a combination of rubber, plastics and metallic elements are frequently used in applications to overcome the above aforementioned relative displacements. Such pipe structures are commonly known as "Flexible Pipe" and when applied for the purpose of transferring flowing media between the seabed and the sea surface the pipe structure is referred to as a "Flexible Riser".

Umbilicals constructed from small bore pipes and/or electrical cables and/or optical cables together with possible armor wiring and external thermoplastic sheeting are frequently used to transfer electrical or hydraulic power and/or electrical or optical control signals between the seabed and the sea surface. The umbilical used in such a dynamic application is commonly referred to as a "Dynamic Umbilical". In the description of the invention the focus will be on its applicability to Flexible Riser, however, the invention equally apply to Dynamic Umbilicals.

A number of configurations are used when suspending the flexible pipe between the seabed and the buoyant unit. The main riser configurations are those known by names of "Free Hanging Catenary", "Chinese Lantern", "Steep S", "Steep Wave", "Lazy S", "Lazy Wave" and "Pliant Wave". The shape of the various riser configurations is attained by use of concentrated or distributed buoyancy elements fixed to the riser and sometimes tethered back to the seabed as well as weight elements and tether lines to seabed anchors.

In all these configurations the flexible pipe is continuous from the unit to the seabed except for any joints at some mid water depth required to join flexible pipes of different constructions if so required or joining made via short length of hard pipe over support structures such as mid water arches employed in for instance the "Steep S" and "Lazy S" configurations.

In particular, in shallow water and harsh environments a large proportion of the total riser length is exposed to hydrodynamic loads from the wave action and any buoy structures used in producing the riser configuration are equally exposed to said wave loading. This in combination with the excursions of the surface unit can lead to extreme dynamic movements of the flexible pipe with over stressing, over bending of the pipe or unacceptable compressive loads in the flexible pipe. Also buoyant support structures may become unstable and exhibit unacceptable dynamic motions rendering the system unfeasible.

A further complication may arise in shallow water applications when the riser system is used in combination with a surface unit that may at times be over the riser system, such as for instance with a turret moored monohull vessel that will weather vane in response to the prevailing environmental loadings. In this instance the available height from the seabed that can be used to generate a riser configuration is limited by the requirement to provide clearance to the bottom of the vessel above, which will experience vertical motions up and down in addition to the water currents.

United States Patent No. US 7,040,841 B2, entitled "Shallow Water Riser Support" by Kelm, R., et al., describes a fluid transfer system wherein a turret lies outboard of the hull of a vessel. The system includes a seafloor riser support that is rigid, that has a lower end mounted on the sea floor, and that holds rigid pipes that extend upward from the seafloor. Connectors connect ends of flexible risers (flexible pipes or hoses) to the rigid pipes. The flexible risers extend in curves around the arched top of the seafloor riser support, and then extend in a simple catenary curve from a point on the top of the seafloor riser support to the turret of the vessel. Weight modules are mounted to the flexible riser at locations spaced along the length of the flexible riser.

Although US 7,040,841 B2 discusses the use of double catenary curves, from Fig. 4 of US 7,040,841 B2, it appears that only a simple catenary curve is illustrated.US 7,040,841 B2 discloses: a shallow-water conduit system for transferring hydrocarbons from a seabed connection point to a floating vessel or structure, the system comprising: a rigid riser support structure fixed to the seabed adjacent the connection point, said riser support having a fixed point elevated above the seabed; a first fixed pipe supported by the riser support, said first pipe extending from the seabed connection point to the fixed point; and a second pipe extending from the fixed point to the floating vessel or structure, wherein the second pipe is flexible, wherein an initial portion of the second pipe extending from the fixed point is also supported by the riser support; and wherein a section of the flexible second pipe is fitted with a plurality of weight modules. In US 7,040,841 B2, the weight modules are used for a different purpose from that of the present invention. US 7,040,841 B2 addresses the problem of waves applying large forces to the vessel and to the risers in storms. The weight modules, which may be formed of steel, undergo less acceleration and less motion during severe storms, in comparison with risers not equipped with weight modules.

Thus, the purpose of the weight modules in US 7,040,841 B2 is to increase the inertia of the flexible riser to make sure that the riser does not move in unwanted directions during, for example, a storm. In contrast, the purpose of the particular arrangement of the weight modules and buoyancy beads of the present invention is to (a) create an inverse catenary curve and to (b) increase the excursion envelope of the floating vessel or structure.

### Summary of the Invention

The object of the present invention is to improve the response of the flexible pipe such that a flexible pipe based system can be used in harsher and shallower water applications.This object is achieved by means of the shallow-water conduit system according to claim 1. Unlike the known riser configurations where the riser is terminated at the seabed in close proximity to the mudline in the current invention the riser is suspended from a rigid structure extending up from the seabed to somewhere at mid water depth. The connection at this point is fixed and will not be subject to any significant movement even when exposed to extreme environmental loadings. The flexible pipe in its simplest configuration is suspended in a catenary configuration between the mid water connection point and the surface unit. This arrangement was proposed by Kelm et al in US Patent US 7,040,841 B1. However, in the current invention the further buoyancy beads are added to the flexible pipe to provide one or more inverse catenary shapes along the length of the riser, which will further greatly enhance the relative movements that can be accommodated between the surface unit and the mid water fixity points. Buoyancy beads may also be attached to the flexible pipe to add weight locally to change the shape of the configuration and the riser's dynamic response if required. Subject to the seabed conditions the riser may be allowed to touch the seabed and external wear modules may be attached to the flexible pipe in the touch down area should this feature be required.

### Brief Description of the Drawings

Other features and advantages of the present invention will be clear from reading the description hereafter, given by way of non-limitative example, with reference to the accompanying drawing wherein:

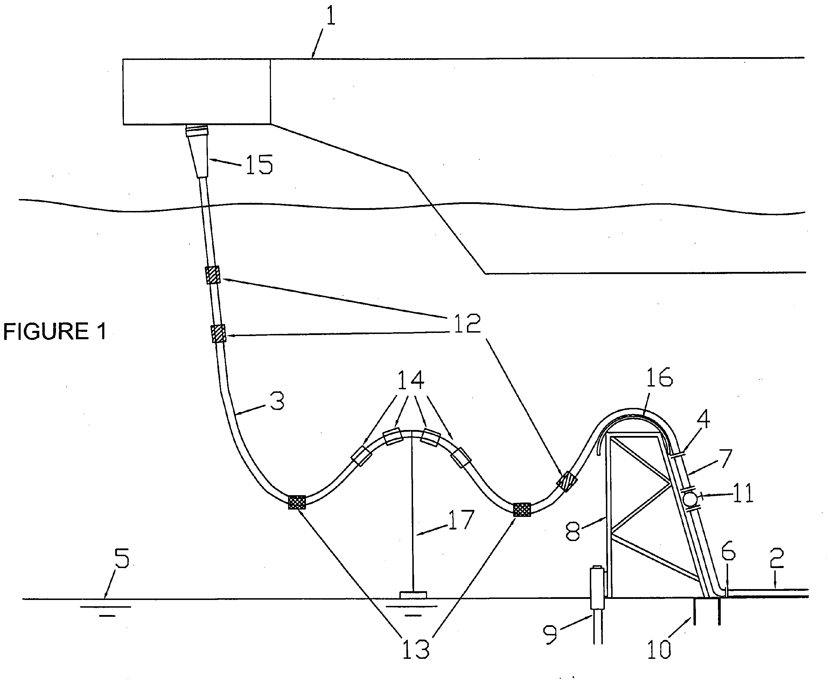

Figure 1 illustrates a conduit system of the present invention.

### Brief Description of the Invention

Other features and advantages will become more apparent form the description of one preferred embodiment of the invention and from the appended drawing depicting the invention.

The present invention relates to a conduit system to carry liquid or gas or a combination of such media i.e. hydrocarbons and or power and or electrical/optical signals to or from a buoyant unit 1 at or near the sea surface and the seabed 2. In case of hydrocarbons the flow is carried via a flexible pipe 3 attached to the buoyant unit 1 via a flanged or similar type pipe connection. The flexible pipe is attached to a fixed point 4 elevated substantially above the seabed mudline 5. The conduit for the media from the fix point 4 to the seabed connection point 6 is via fixed or flexible pipe 7 as the case may be.

The fixed or flexible pipe 7 is supported by a riser support 8 which is preferably a rigid structure that can be constructed from steel, concrete or other rigid construction material. The riser support 8 is fixed to the seabed and the structure's foundation can be drilled or driven piles 9 connected to the structure such as suction cans 10 or gravity type foundation or a combination of such foundations. The fixed or flexible pipe 7 may include valve arrangement 11 for isolation and manifolding if more than one riser is used, pig launcher or pig receiver. Since such devices can be installed at mid water depth it may allow diver intervention using air diving technique rather than saturation diving required at greater depth.The section of the flexible pipe (3) between the buoyancy beads (14) and the floating vessel or structure (1) is also fitted with a weight module (12).The flexible pipe 3 may be fitted with further weight modules 12 to change the catenary shape and/or improve the dynamic response of the flexible pipe when subject to environmental loadings and movements of the surface unit 1. The flexible pipe 3 may be allowed to touch the seabed and can if required be fitted with external wear protection 13.

To accommodate even larger excursions of the buoyant unit 1 the flexible pipe will be fitted with buoyancy beads 14 to create one or more inverse catenary shapes along the length of the flexible pipe. These inverse catenary shapes greatly enhance the excursion envelope of the surface unit the system can accommodate as compared to a riser hanging in a simple catenary shape as proposed in prior art.

The flexible pipe 3 may require bend stiffener 15 to provide a gradual increase in bend stiffness and so as to not over bend or kink the pipe at or close to its attachment points. The pipe may also be supported by an arch or a gutter structure 16 to avoid the flexible pipe being over bend in the in and out of plane directions. The tether 17 may be required to anchor and prevent the flexible pipe 3 from over float.

One advantage of the present invention is that it increases the excursions and movements that the flexible pipe can accommodate without exceeding its allowable mechanical properties for stress and bending. This reduces the requirement to the mooring arrangement required for the surface unit and also allows the system to be deployed in more shallow and harsh environment.

Another advantage with the current invention is that it reduces the length of flexible pipe to be used and since flexible pipe is more expensive than normal rigid pipe the invention offers savings on flexible pipe material, which can be significant particularly when a large number of risers are configured as proposed.

The proposed invention is also less sensitive to changes in the density of the fluid being conveyed inside the flexible pipe and so can for instance readily accommodate slug flow where the flow regime consist of gas flow separated by liquid slugs flowing through the system.

## Claims

1. A shallow-water conduit system for transferring hydrocarbons from a seabed connection point (6) to a floating vessel or structure (1), the system comprising:
a rigid riser support structure (8) fixed to the seabed adjacent the connection point (6), said riser support (8) having a fixed point (4) elevated above the seabed;
a first fixed pipe (7) supported by the riser support (8), said first pipe (7) extending from the seabed connection point (6) to the fixed point (4); and
a second pipe (3) extending from the fixed point (4) to the floating vessel or structure (1), wherein the second pipe (3) is flexible, and wherein an initial portion of the second pipe (3) extending from the fixed point (4) is also supported by the riser support (8, 16);
wherein:
a section of the flexible second pipe (3) is fitted with a plurality of buoyancy beads (14);
the section of the flexible second pipe (3) between the riser support structure (8) and the buoyancy beads (14) is fitted with a weight module (12); and
the section of the flexible pipe (3) between the buoyancy beads (14) and the floating vessel or structure (1) is also fitted with a weight module (12), to create an inverse catenary curve of the flexible second pipe (3) to provide an excursion envelope.

2. The conduit system as claimed in Claim 1, wherein the section of the flexible pipe (3) between the buoyancy beads (14) and the floating vessel or structure (1) is fitted with two weight modules (12).

3. The conduit system as claimed in Claim 1 or Claim 2, wherein the flexible second pipe (3) is fitted with external wear protection (13) for allowing the flexible second pipe (3) to touch the seabed (2) without damaging the flexible second pipe (3).

4. The conduit system as claimed in Claim 1 or Claim 2, wherein the flexible second pipe (3) is provided with a bend stiffener (15) for allowing the flexible second pipe (3) to bend gradually.

5. The conduit system as claimed in Claim 1 or Claim 2, wherein the flexible second pipe (3) is provided with a tether (17) for anchoring the section of the flexible second pipe (3) fitted with buoyancy beads (14) to the seabed (2).

6. The conduit system as claimed in Claim 1 or Claim 2, further comprising a communication system for carrying communication signals between the seabed (2) and the floating vessel or structure (1).

7. The conduit system as claimed in Claim 1 or Claim 2, further comprising a power system for power transmission between the seabed (2) and the floating vessel or structure (1).

## Patentansprüche

1. Flachwasser-Leitungssystem zum Transportieren von Kohlenwasserstoffen von einem Meeresgrundverbindungspunkt (6) zu einem schwimmenden Gefäß oder einer schwimmenden Struktur (1), wobei das System umfasst:
eine starre Aufstiegshalterungsstruktur (8), die nahe dem Verbindungspunkt (6) am Meeresgrund befestigt ist, wobei die Aufstiegshalterung (8) einen gegenüber dem Meeresgrund erhöhten festen Punkt (4) aufweist;
eine von der Aufstiegshalterung (8) gehaltene erste feste Röhre (7), wobei die erste Röhre (7) vom Meeresgrundverbindungspunkt (6) bis zum festen Punkt (4) verläuft; und
eine vom festen Punkt (4) zu dem schwimmenden Gefäß oder der schwimmenden Struktur (1) verlaufende zweite Röhre (3), wobei die zweite Röhre (3) flexibel ist und wobei ein vom festen Punkt (4) aus verlaufender Anfangsabschnitt der zweiten Röhre (3) ebenfalls von der Aufstiegshalterung (8, 16) gehalten ist;
wobei:
ein Bereich der flexiblen zweiten Röhre (3) mit mehreren Auftriebsrippen (14) ausgestattet ist;
wobei der Bereich der flexiblen zweiten Röhre (3) zwischen der Aufstiegshalterungsstruktur (8) und den Auftriebsrippen (14) mit einem Gewichtsmodul (12) ausgestattet ist; und
der Bereich der flexiblen Röhre (3) zwischen den Auftriebsrippen (14) und dem schwimmenden Gefäß oder der schwimmenden Struktur (1) ebenfalls mit einem Gewichtsmodul (12) ausgestattet ist, um eine inverse Kettenlinie der flexiblen zweiten Röhre (3) zum Gewährleisten eines Exkursionsumfangs zu schaffen.

2. Leitungssystem nach Anspruch 1, wobei der Bereich der flexiblen Röhre (3) zwischen den Auftriebsrippen (14) und dem schwimmenden Gefäß oder der schwimmenden Struktur (1) mit zwei Gewichtsmodulen (12) ausgestattet ist.

3. Leitungssystem nach Anspruch 1 oder Anspruch 2, wobei die flexible zweite Röhre (3) mit einem Schutz (13) gegen äußere Abnutzung ausgestattet ist, um der flexiblen zweiten Röhre (3) Berührungen mit dem Meeresgrund (2) ohne Schaden an der flexiblen zweiten Röhre (3) zu ermöglichen.

4. Leitungssystem nach Anspruch 1 oder Anspruch 2, wobei die flexible zweite Röhre (3) mit einem Krümmungsversteifungselement (15) versehen ist, um der flexiblen zweiten Röhre (3) eine graduelle Krümmung zu ermöglichen.

5. Leitungssystem nach Anspruch 1 oder Anspruch 2, wobei die flexible zweite Röhre (3) mit einer Halteleine (17) zum Verankern des mit den Auftriebsrippen (14) ausgestatteten Bereichs der flexiblen zweiten Röhre (3) am Meeresgrund versehen ist.

6. Leitungssystem nach Anspruch 1 oder Anspruch 2, ferner umfassend ein Kommunikationssystem zum Übertragen von Kommunikationssignalen zwischen dem Meeresgrund (2) und dem schwimmenden Gefäß oder der schwimmenden Struktur (1).

7. Leitungssystem nach Anspruch 1 oder Anspruch 2, ferner umfassend ein Stromsystem zur Stromübertragung zwischen dem Meeresgrund (2) und dem schwimmenden Gefäß oder der schwimmenden Struktur (1).

## Revendications

1. Système de conduite en eau peu profonde pour transférer des hydrocarbures d'un point de raccordement de fond marin (6) à une structure ou bâtiment flottant (1), le système comprenant :
une structure de support de tube prolongateur rigide (8) fixe sur le fond marin, adjacente au point de raccordement (6), ledit support de tube prolongateur (8) ayant un point fixe (4) élevé au-dessus du fond marin ;
un premier tuyau fixe (7) supporté par le support de tube prolongateur (8), ledit premier tuyau (7) s'étendant à partir du point de raccordement de fond marin (6) jusqu'au point fixe (4) ; et
un second tuyau (3) s'étendant à partir du point fixe (4) jusqu'à la structure ou bâtiment flottant (1) dans lequel le second tuyau (3) est flexible, et dans lequel une partie initiale du second tuyau (3) s'étendant à partir du point fixe (4) est également supportée par le support de tube prolongateur (8, 16) ;
dans lequel :
une section du second tuyau flexible (3) est montée avec une pluralité de bourrelets de flottabilité (14) ;
la section du second tuyau flexible (3) entre la structure de support de tube prolongateur (8) et les bourrelets de flottabilité (14) est montée avec un module de poids (12) ; et
la section du tuyau flexible (3) entre les bourrelets de flottabilité (14) et la structure ou bâtiment flottant (1) est également montée avec un module de poids (12), afin de créer une courbe de caténaire inverse du second tuyau flexible (3) pour fournir une enveloppe d'excursion.

2. Système de conduite selon la revendication 1, dans lequel la section du tuyau flexible (3) entre les bourrelets de flottabilité (14) et la structure ou bâtiment flottant (1) est montée avec deux modules de poids (12).

3. Système de conduite selon la revendication 1 ou la revendication 2, dans lequel le second tuyau flexible (3) est monté avec une protection contre l'usure externe (13) pour permettre au second tuyau flexible (3) d'être en contact avec le fond marin (2) sans endommager le second tuyau flexible (3).

4. Système de conduite selon la revendication 1 ou la revendication 2, dans lequel le second tuyau flexible (3) est prévu avec un raidisseur de coude (15) pour permettre au second tuyau flexible (3) de se couder progressivement.

5. Système de conduite selon la revendication 1 ou la revendication 2, dans lequel le second tuyau flexible (3) est prévu avec une attache (17) pour ancrer la section du second tuyau flexible (3) montée avec des bourrelets de flottabilité (14) sur le fond marin (2).

6. Système de conduite selon la revendication 1 ou la revendication 2, comprenant en outre un système de communication pour transporter des signaux de communication entre le fond marin (2) et la structure ou bâtiment flottant (1).

7. Système de conduite selon la revendication 1 ou la revendication 2, comprenant en outre un système d'énergie pour la transmission d'énergie entre le fond marin (2) et la structure ou bâtiment flottant (1).
